# FASCICULE DE BREVET EUROPEEN

(11) **EP 3 041 796 B1**
(45) Date de publication et mention de la délivrance du brevet: **26.09.2018**
(21) Numéro de dépôt: 14746995.1
(22) Date de dépôt: 29.07.2014
(51) Int. Cl.: C02F 11/18, C02F 11/12, C02F 103/32

(54) **PROCEDE ET DISPOSITIF D'HYDROLYSE THERMIQUE EN CONTINU AVEC RECIRCULATION DE VAPEUR DE RECUPERATION**
VERFAHREN UND VORRICHTUNG FÜR KONTINUIERLICHE THERMISCHE HYDROLYSE MIT REZIRKULATION VON WIEDERGEWONNENEM DAMPF
METHOD AND DEVICE FOR CONTINUOUS THERMAL HYDROLYSIS WITH RECOVERED STEAM RECIRCULATION

(30) Priorité: 06.09.2013 FR 1358591
(43) Date de publication de la demande: 13.07.2016
(73) Titulaire: Veolia Water Solutions & Technologies Support, 94417 Saint-Maurice Cedex (FR)
(72) Inventeur: CHAUZY, Julien, F-92160 Antony (FR); CRAMPON, Cédric, F-94500 Champigny-sur-Marne (FR); AUPETIT, Thierry, F-94340 Joinville Le Pont (FR); GILBERT, Andrew B., Worcs Worcestershire WR9 8UY (GB)
(74) Mandataire: Vidon Brevets & Stratégie
(86) Numéro de dépôt international: PCT/EP2014/066254
(87) Numéro de publication internationale: WO 2015/032552

(56) Documents cités:
- EP-A1- 2 612 842
- WO-A1-2009/121873
- US-A- 5 234 469
- US-A- 5 888 307
- US-A1- 2004 168 990

## Description

### 1. Le domaine de l'invention

La présente invention concerne un procédé et un dispositif pour l'hydrolyse thermique en continu de boues contenant de la matière organique, mélangées ou non avec d'autres déchets contenant de la matière organique. Ces boues ou déchets peuvent par exemple être issus du traitement des eaux usées domestiques (boues d'épuration digérées ou non digérées, graisses issues du prétraitement), ou issus du traitement des eaux usées industrielles (par exemple industrie agroalimentaire, abattoirs, mélasses), ou déchets de type ordures ménagères contenant de la matière organique, ou être issus de matières de vidange, de bac à graisses. Le terme « boue » sera par la suite utilisé dans le document.

### 2. Art antérieur

Les boues provenant du traitement des eaux usées, qu'elles soient d'origine domestique ou industrielle ou qu'elles proviennent de l'agriculture, peuvent être traitées par voie biologique, notamment par digestion anaérobie.

L'objectif des traitements biologiques est de dégrader la matière organique contenue dans ces boues. Cette dégradation peut avoir pour but de stabiliser les boues, de permettre la production d'énergie (au travers de la production de biogaz) et / ou encore de réduire le volume des boues. Toutefois, certains composés organiques sont plus difficiles à dégrader par voie biologique que d'autres et il est connu qu'un prétraitement par hydrolyse thermique permet d'accélérer le processus de dégradation biologique. Ce traitement thermique est généralement effectué sous pression à une température supérieure à 100°C, et en pratique pouvant aller jusqu'à 220°C, pendant une période de temps prédéterminée, en pratique généralement d'une demi-heure. Grâce à un tel traitement d'hydrolyse thermique, la matière organique difficilement biodégradable est transformée en composés qui peuvent être ensuite plus facilement dégradés biologiquement.

D'une façon classique, cette dégradation biologique ultérieure peut se faire par digestion au sein d'un réacteur fermé fonctionnant en anaérobie appelé digesteur. De tels digesteurs anaérobiques ne peuvent fonctionner correctement que s'ils opèrent à une température adéquate et constante, nécessitant généralement un système de chauffage, et que s'ils sont correctement brassés. Ce brassage est d'autant plus aisé que les boues entrantes dans le digesteur sont fluides, c'est-à-dire de faible viscosité.

On connaît dans l'art antérieur différents types de procédés d'hydrolyse thermique, certains étant mis en oeuvre en traitant une par une, c'est-à-dire de façon discontinue, des quantités données de boues à hydrolyser (fonctionnement en « batch») tandis que d'autres procédés sont conçus pour permettre un traitement en continu, ou à tout le moins de façon semi-continue, des boues à hydrolyser.

Parmi l'art antérieur relatif à ces dispositifs et procédés d'hydrolyse thermique, on peut citer notamment les documents de brevets WO96/09882 et WO2006/027062 qui concernent tous les deux des procédés en batch.

De tels procédés en batch présentent les inconvénients de nécessiter la gestion des cycles de traitement des différents lots de boues devant être traités, et d'un fonctionnement répétitif de certains équipements, tel que l'ouverture-fermeture de vannes par exemple, pouvant conduire à une usure prématurée.

Parmi les techniques de traitement par hydrolyse thermique des boues en continu ou semi-continu, on peut citer les techniques décrites dans le document de brevet EP1198424 et celles décrites dans le document de brevet WO2009/121873.

Dans la technique décrite dans EP1198424, les boues sont amenées dans un réacteur où elles transitent pendant une période de 5 à 60 mn à une température comprise entre 130°C et 180°C. Les boues hydrolysées grâce à un tel traitement sont ensuite refroidies au moyen d'un échangeur de chaleur de façon à s'assurer que la température de celles-ci est suffisamment basse pour être compatible avec le fonctionnement d'un digesteur en aval et éviter à la biomasse de ce digesteur d'être détruite. L'énergie ainsi récupérée permet de préchauffer les boues avant leur entrée dans le réacteur d'hydrolyse thermique. Cette technique met toutefois en oeuvre des échangeurs sur boues concentrées non hydrolysées à plus de 10% de siccité, dont la gestion peut en pratique s'avérer difficile et contraignante pour l'utilisateur puisque nécessitant des périodes d'arrêt pour maintenance et nettoyage. D'autre part, cette configuration met en oeuvre une pompe, en l'occurrence la pompe 11 sur la figure 1 du document EP1198424, fonctionnant sur des boues très chaudes (130 à 180°C), ce qui, par expérience, induit que cette pompe a une courte durée de vie. Enfin, cette configuration est limitée en terme de concentration des boues à traiter dans la mesure où elle ne permet pas de traiter des boues ayant une siccité supérieure à 20%. Elle n'est en outre pas optimisée en terme de consommation énergétique car si les boues étaient encore plus concentrées (c'est-à-dire avec une siccité supérieure à 20% et donc une teneur en eau inférieure à 80%), le besoin en vapeur serait davantage réduit compte tenu que le volume d'eau (contenu dans les boues) à chauffer avec la vapeur serait réduit.

Dans la technique décrite dans le document de brevet WO2009/121873, les boues sont traitées en continu dans un réacteur d'hydrolyse thermique se présentant sous une forme tubulaire dans lequel de la vapeur d'eau est directement injectée.

Ce procédé présente l'avantage d'être un procédé réellement continu. Toutefois, bien qu'ayant considérablement amélioré le traitement des boues par hydrolyse thermique par rapport aux autres procédés qui existent sur le marché, il n'en présente pas moins certaines limites.

En premier lieu, si la viscosité des boues à hydrolyser introduites dans le réacteur est trop élevée, l'injection de la vapeur dans celles-ci peut s'avérer difficile. En pratique, ce procédé peut traiter des boues qui présentent un taux de siccité élevée. Au-delà de certaines siccités, l'hydrolyse thermique pourrait s'avérer non optimale, ce qui limiterait les performances de la digestion anaérobie placée en aval de l'hydrolyse thermique.

En deuxième lieu, les expériences menées par la Déposante ont montré que les contraintes thermiques et mécaniques observées au sein du réacteur d'hydrolyse thermique mis en oeuvre dans le cadre du procédé décrit dans le document WO2009/121873 pouvaient nécessiter des dispositions constructives particulières. Il a été observé que l'intégralité de la vapeur injectée n'était pas totalement condensée dans les boues au-delà de certaines siccités. En pratique, la vapeur injectée dans le réacteur peut connaître des chemins préférentiels. Ce problème est d'ailleurs identifié dans le brevet WO2009/121873, notamment au premier paragraphe de la page 5 de ce document qui précise que lorsque le réacteur présente une partie horizontale, la vapeur et les boues peuvent avoir tendance à se séparer en deux couches, à savoir une couche supérieure contenant la vapeur et une couche inférieure contenant les boues.

Or, pour tous les procédés d'hydrolyse thermique et en particulier pour ceux qui fonctionnent en continu, la phase critique du procédé correspond au transfert et à la condensation de la vapeur dans la boue. En effet, si cette étape n'est pas effectuée correctement, les performances du procédé d'hydrolyse thermique peuvent être considérablement dégradées que ce soit en terme de réaction chimique qu'en termes économiques, la quantité de vapeur devant être utilisée étant alors plus importante.

Les procédés d'hydrolyse thermique sur boues déshydratées se heurtent donc à la difficulté d'injecter la vapeur dans les boues de façon efficace, et corollairement à la difficulté d'assurer leur mélange, dès lors que ces boues sont trop visqueuses. Les boues étant par nature visqueuses, plus leur siccité est grande plus la vapeur a du mal à être injectée dans la boue, à être mélangée à celle-ci et à lui céder son énergie par condensation pour provoquer l'hydrolyse thermique des composés difficilement biodégradables.

Dans les procédés en batch, il est préconisé de mettre en oeuvre une agitation dans les cuves de traitement pour favoriser le mélange intime de la vapeur avec des boues à traiter. Grâce à un tel mélange agité effectué dans les cuves de traitement, le mélange de boues et de vapeur devient intime et la vapeur peut céder rapidement son énergie en se condensant dans les boues. Toutefois, tant dans le cadre des procédés de l'art antérieur fonctionnant en continu que dans ceux fonctionnant en batch, les boues ne peuvent pas être hydrolysées efficacement en pratique, à tout le moins dans la transposition industrielle qui est faite des techniques décrites et revendiquées dans les documents de brevet cités ci-dessus, dès lors que leur siccité est supérieure à 20% ce qui impose que les boues doivent être limitées à 20 % de matière sèche en poids.

Le document de brevet WO2009/121873 préconise la mise en oeuvre de mélangeurs statiques ou dynamiques dans le réacteur de façon à améliorer le mélange de cette vapeur avec les boues. Ceci est exposé au dernier paragraphe de la page 5 de WO2009/121873. De tels mélangeurs sont particulièrement préconisés lorsque la vapeur est injectée dans une partie horizontale du réacteur, puisqu'une telle partie horizontale est identifiée, comme déjà indiqué ci-dessus, comme une zone dans laquelle la vapeur a une propension particulière à se trouver un chemin d'évacuation préférentiel et à ne pas se mélanger complètement à la boue, donc à ne pas lui céder son énergie correctement, cette propension conduisant donc à diminuer les performances du réacteur d'hydrolyse thermique. On notera toutefois qu'aucune réalisation industrielle mettant en oeuvre de tels mélangeurs dynamiques ou statiques pour le traitement de boues n'a effectivement été mise en oeuvre, à la connaissance de la demanderesse, sur les installations commercialisées jusqu'ici.

### 3. Objectifs de la présente invention

L'objectif de la présente invention est de proposer un procédé, et un dispositif associé à la mise en oeuvre de ce procédé, permettant dans au moins un mode de réalisation d'améliorer les performances de la technologie divulguée dans WO2009/121873 considérée ici comme l'art antérieur le plus proche de l'invention qui sera décrite ci-après.

Notamment, un objectif de la présente invention est de décrire un tel procédé et un tel dispositif qui permettent, dans au moins un mode de réalisation, le traitement de boues destinées à être hydrolysées thermiquement et présentant des taux de siccité supérieurs au taux de siccité maximal pouvant être jusqu'ici mis effectivement en oeuvre par l'art antérieur, et ce sans dégrader les performances de la digestion suivant classiquement l'hydrolyse thermique des boues.

Un objectif de la présente invention est aussi de proposer un tel procédé et un tel dispositif permettant, dans au moins un mode de réalisation, l'obtention de températures homogènes du mélange de boues et de vapeur à l'intérieur du réacteur afin d'atteindre des performances d'hydrolyse thermique élevées et de s'affranchir ainsi des contraintes mécaniques sur les réacteurs liées à des températures inhomogènes.

Un autre objectif de l'invention est de procurer une telle technique qui permet, dans au moins un mode de réalisation, de réduire la consommation en énergie nécessaire à sa mise en oeuvre.

Notamment, l'invention poursuit l'objectif de divulguer un tel procédé et un tel dispositif qui permettent, dans au moins un mode de réalisation, de réduire la consommation de vapeur nécessaire à l'hydrolyse des boues.

Encore un autre objectif de l'invention est de décrire un tel procédé et un tel dispositif pouvant mettre en oeuvre, dans au moins un mode de réalisation, des réacteurs de plus faibles volumes, notamment de plus faibles longueurs, que dans l'art antérieur tout en assurant une condensation optimisée de la vapeur dans les boues.

Encore un autre objectif de l'invention est de décrire un tel procédé et un tel dispositif qui permettent, dans au moins un mode de réalisation, l'hygiénisation des boues.

### 4. Exposé de l'invention

Tout ou partie de ces objectifs sont atteints grâce à l'invention qui concerne, en premier lieu, un procédé d'hydrolyse thermique en continu de boues à traiter contenant de la matière organique, ledit procédé comprenant les étapes consistant à :
déshydrater et homogénéiser lesdites boues à traiter pour obtenir des boues présentant une siccité supérieure à 20% et jusqu'à 35% en poids de matières sèches;
réaliser simultanément l'injection de vapeur de récupération dans lesdites boues et le mélange desdites boues avec ladite vapeur de récupération au moyen d'un injecteur-mélangeur dynamique primaire de façon à obtenir un mélange uniforme primaire de boues préchauffées ;
réaliser simultanément l'injection de vapeur vive dans ledit mélange uniforme primaire, et le mélange dudit mélange uniforme primaire avec ladite vapeur vive au moyen d'un injecteur-mélangeur dynamique secondaire de façon à obtenir un mélange uniforme secondaire de boues chauffées à la température d'hydrolyse thermique souhaitée ;
acheminer ledit mélange uniforme secondaire vers un réacteur tubulaire sous pression et provoquer l'écoulement essentiellement de type piston, de ce mélange uniforme secondaire dans ledit réacteur selon un temps de séjour suffisant et à une température suffisante pour permettre l'hydrolyse thermique de la matière organique présente dans ce mélange uniforme secondaire ;
produire ladite vapeur de récupération au sein de moyens de production de vapeur de récupération à partir dudit mélange uniforme secondaire hydrolysé obtenu en sortie dudit réacteur tubulaire ;
refroidir ledit mélange uniforme secondaire hydrolysé à sa sortie desdits moyens de production de vapeur de récupération à une température permettant la digestion ultérieure de la matière organique hydrolysée qu'il contient.

On notera que l'on entend dans la présente description par injecteur-mélangeur dynamique tout mélangeur constitué d'une chambre et de moyens permettant de provoquer une agitation, grâce à des moyens mécaniques motorisés, des différentes phases entrant dans cette chambre afin d'obtenir en sortie un mélange uniforme. De tels éléments peuvent, par exemple, être constitués de pales ou de vis mues par un rotor, ou de tout autre moyen de mélange également mus par un rotor.

On entend par flux de type piston, un flux au sein duquel toutes les particules se déplacent à la même vitesse.

Au sens de l'invention :
- de la vapeur de récupération est de la vapeur sous pression produite en exploitant la chaleur des boues hydrolysées en sortie de réacteur ;
- de la vapeur vive est de la vapeur sous pression produite au moyen d'un équipement annexe prévu à cet effet, comme par exemple une chaudière, un système de cogénération au tout autre système adapté.

La mise en oeuvre du refroidissement du mélange homogène secondaire hydrolysé vise à en abaisser la température. Ceci pourra par exemple être obtenu en le faisant transiter dans un ou plusieurs échangeurs de chaleur et/ou en le diluant avec de l'eau et/ou des boues fraiches. Dans le cas de la dilution, la dilution des boues entrainera une modification de leur siccité ainsi qu'une diminution de leur température.

Ainsi, l'invention propose de procéder au mélange primaire de vapeur de récupération avec les boues à hydrolyser afin d'obtenir un mélange primaire uniforme parfait de boues préchauffées, puis à procéder au mélange secondaire de vapeur vive avec le mélange primaire afin d'obtenir un mélange secondaire uniforme parfait de boues chauffées, en amont de l'étape d'hydrolyse thermique effectuée subséquemment dans un réacteur tubulaire. Une étape de production de la vapeur de récupération à partir dudit mélange uniforme secondaire hydrolysé obtenu en sortie dudit réacteur tubulaire est également mise en oeuvre pour alimenter en vapeur de récupération l'étape de mélange primaire.

Ainsi, selon l'invention les phases de mélange primaire et secondaire de la boue avec la vapeur de récupération et avec la vapeur vive sont clairement distinctes de la phase d'hydrolyse thermique, les phases de mélange et la phase d'hydrolyse thermique étant d'ailleurs menées à bien dans des équipements distincts.

Le mélange uniforme, constitué du premier et du deuxième mélanges uniformes, réalisé préalablement à l'hydrolyse thermique permet à la vapeur d'eau de se condenser dans les boues au niveau des injecteur-mélangeurs dynamiques, et ainsi de chauffer les boues. Ce mélange uniforme est ensuite acheminé vers le réacteur dans lequel il peut s'écouler en flux aussi proche que possible de l'écoulement piston. Se présentant sous une phase liquide monophasique uniforme, il rentre dans le réacteur à une température uniforme, température à laquelle l'hydrolyse thermique des composés difficilement dégradables biologiquement peut être effectuée de façon efficace et optimisée.

D'une façon classique, à la sortie du réacteur tubulaire, ce mélange uniforme qui contient la matière organique hydrolysée est éventuellement ramené à une température et/ou à une concentration, par dilution si nécessaire, permettant sa digestion ultérieure.

Ainsi, l'invention se démarque nettement de l'art antérieur et notamment du document de brevet WO2009/121873 par la caractéristique selon laquelle le mélange des boues à hydrolyser avec la vapeur d'eau, en l'occurrence de la vapeur de récupération puis de la vapeur vive, se fait en amont du réacteur d'hydrolyse thermique et non pas au sein de celui-ci.

Une telle option est en rupture par rapport à l'enseignement de cet art antérieur qui indiquait la possibilité d'utiliser un mélangeur statique ou dynamique intégré au réacteur. Cet art antérieur ne permettait pas toutefois l'obtention d'un mélange suffisamment homogène pour permettre une optimisation de l'hydrolyse thermique. La présente invention résout ce problème en réalisant ce mélange en amont du réacteur de façon telle que la phase qui entre dans ce dernier soit complètement homogène et que l'énergie fournie par la vapeur d'eau au sein de ce mélange puisse être intégralement transférée à la boue de façon telle que toute la matière pouvant être hydrolysée thermiquement puisse l'être en prévoyant un temps de séjour, c'est à dire une longueur de réacteur, suffisante.

Grâce à l'homogénéité du mélange de boue et de vapeur transitant dans le réacteur, du fait que l'intégralité de la vapeur a été condensée dans la boue grâce à l'efficacité de l'injecteur mélangeur dynamique, une homogénéité de température de ce mélange peut être obtenue dans celui-ci. Une telle homogénéité de température permet de s'affranchir de l'apparition de chemins préférentiels de cheminement de la vapeur au sein du réacteur et, corolairement, de s'affranchir des contraintes thermiques et mécaniques inhérentes à l'apparition de tels chemins préférentiels d'écoulement.

Notamment, le mélange uniforme parfait de la vapeur et des boues permet de diminuer uniformément la viscosité de celles-ci et donc de s'affranchir des effets mécaniques liés au cisaillement des boues.

L'obtention d'un mélange homogène uniforme de boues chauffées en amont du réacteur, obtenu à partir de boues à hydrolyser et de vapeur de récupération puis de vapeur vive, au sein d'injecteur-mélangeur dynamiques primaire et secondaire présente en effet l'avantage de pouvoir traiter des boues à hydrolyser présentant une siccité élevée, et notamment une siccité supérieure à 20%.

La mise en oeuvre de cette technique contribue également à réduire la quantité de vapeur vive nécessaire à l'hydrolyse thermique des boues. En effet, la vapeur de récupération produite et injectée dans les boues se substitue en partie à la vapeur vive injectée dans les boues en vue de les hydrolyser. Il est ainsi possible de réduire la quantité d'énergie nécessaire à la production de la vapeur vive et ainsi de faire des économies en terme de consommation énergétique.

En outre, les boues hydrolysées produites par la mise en oeuvre d'un procédé selon l'invention subissent la plupart du temps ultérieurement une digestion. La mise en oeuvre d'une telle digestion permet de produire du biogaz qui est utilisé, à tout le moins en grande partie, pour alimenter une chaudière ou une ou des unités de cogénération afin de produire la vapeur vive nécessaire à l'hydrolyse thermique des boues. Le fait, selon l'invention, de produire de la vapeur de récupération et de l'injecter dans les boues à hydrolyser permet donc de limiter le besoin en vapeur vive et par conséquent de réduire la part du biogaz formé dédiée à la production de vapeur vive pour l'hydrolyse des boues. Il est ainsi possible de produire de l'énergie excédentaire (par exemple de l'électricité, de la chaleur, injection de bio méthane dans le réseau ou autre) à partir de ce biogaz, qui pourra être utilisée à d'autres fins que celle de l'hydrolyse des boues, ou à tout le moins d'en augmenter la quantité produite.

Selon une première variante préférentielle, ladite étape consistant à produire de la vapeur de récupération comprend :
une étape consistant à acheminer ledit mélange uniforme secondaire hydrolysé à sa sortie dudit réacteur tubulaire à l'entrée d'un échangeur de chaleur ;
une étape consistant à acheminer de l'eau à une autre entrée dudit échangeur de chaleur ;
ledit mélange uniforme secondaire hydrolysé transférant au moins en partie sa chaleur à ladite eau pour produire, indirectement, ladite vapeur de récupération.

Dans ce cas, la chaleur des boues hydrolysées est exploitée pour produire indirectement de la vapeur de récupération à partir d'eau injectée dans un échangeur de chaleur à l'intérieur duquel circulent les boues hydrolysées. Selon cette variante, la vapeur de récupération est produite indirectement à partir du mélange uniforme secondaire hydrolysé. Cette mise en oeuvre permet de produire de la vapeur de récupération « propre », c'est-à-dire ne contenant essentiellement pas d'éléments tels que des mousses, des particules, des incondensables ou autres, comme ceci est le cas de la vapeur de flash.

Selon une deuxième variante préférentielle, ladite étape consistant à produire de la vapeur de récupération comprend une étape consistant à acheminer ledit mélange uniforme secondaire hydrolysé à sa sortie dudit réacteur tubulaire dans un réacteur de flash au sein duquel la pression et la température dudit mélange uniforme secondaire sont abaissées rapidement pour produire de la vapeur de flash, ladite vapeur de flash constituant ladite vapeur de récupération.

Dans ce cas, la chaleur des boues hydrolysées est exploitée pour produire directement de la vapeur de récupération sous la forme de vapeur de flash qui sera mélangée aux boues à hydrolyser dans l'injecteur-mélangeur primaire afin d'augmenter leur température : on réalisera ainsi une pré-montée en température des boues à traiter. Selon cette variante, la vapeur de récupération est produite directement à partir du mélange uniforme secondaire.

La pression de ladite vapeur de récupération est préférentiellement comprise entre 1 et 10 bar a. On notera que dans le cadre de la présente description l'unité de pression est le bar absolu (bar a).

La température de ladite vapeur de récupération est préférentiellement comprise entre 100°C et 180°C.

La température desdites boues acheminées à l'entrée dudit injecteur-mélangeur primaire est préférentiellement inférieure à 60°C.

La technique selon l'invention permet de traiter des boues relativement fraîches, c'est-à-dire ayant une température proche de la température ambiante ou de celle de boues digérées. Il n'est ainsi pas nécessaire de préchauffer les boues en amont par exemple au moyen d'un échangeur de chaleur supplémentaire. Ceci présente un avantage notamment sur le plan de la maintenance dans la mesure où l'entretien des échangeurs de chaleur est relativement complexe et coûteux.

La température dudit mélange uniforme primaire en sortie dudit injecteur-mélangeur dynamique primaire sera préférentiellement inférieure à 100°C.

Selon une variante préférentielle de l'invention, ledit mélange uniforme secondaire présente, en sortie dudit injecteur-mélangeur secondaire, une température comprise entre 100°C et 200°C (à savoir la température dans le réacteur permettant l'hydrolyse thermique de la matière organique présente dans lesdites boues) et une pression comprise entre 1 bar a et 22 bar a.

Avantageusement, ledit mélange uniforme secondaire présente, en sortie dudit injecteur-mélangeur secondaire, une température comprise entre 150°C et 170°C (soit la température dans le réacteur permettant l'hydrolyse thermique de la matière organique présente dans lesdites boues) et une pression comprise entre 5 bar a et 15 bar a.

Selon une variante préférentielle de l'invention, la vapeur vive, qui sera utilisée pour réaliser le mélange uniforme secondaire de vapeur vive et du mélange uniforme primaire, présentera une température comprise entre 100°C et 220°C et une pression comprise entre plus de 1 bar a et 23 bar a. De façon préférée entre toutes, on privilégiera une température de cette vapeur d'eau comprise entre 180°C et 200°C et une pression comprise entre 10 bar a et 16 bar a.

La quantité de vapeur vive ainsi apportée aux boues dépendra d'une part de la siccité de ces dernières ainsi que de leur concentration en matière organique à hydrolyser.

Le temps de séjour du mélange uniforme secondaire au sein du réacteur sera, comme indiqué ci-dessous, suffisant pour permettre la réalisation de l'hydrolyse thermique de la matière organique mais en principe sera préférentiellement compris entre 10 minutes et 2 heures, et de façon préférée entre toutes, entre 20 et 40 minutes.

Avantageusement, le temps de séjour dudit mélange uniforme secondaire dans le réacteur sera d'au moins 20 minutes, et la température dudit mélange uniforme secondaire dans le réacteur sera d'au moins 100°C de façon telle que le procédé selon l'invention permettra aussi l'hygiénisation desdites boues, l'intégralité de celles-ci étant à la température requise (>100°C) pendant un temps suffisamment long. Une température supérieure à 70°C pendant au moins 20 minutes appliquée aux boues est nécessaire pour les hygiéniser.

Selon une variante préférentielle de l'invention, ladite étape consistant à refroidir ledit mélange uniforme secondaire hydrolysé en aval du réacteur tubulaire à une température permettant la digestion ultérieure de la matière organique hydrolysée qu'il contient, comprend au moins une dilution à l'eau et/ou avec des boues fraiches, et/ou au moins une étape d'échange de chaleur au sein d'au moins un échangeur de chaleur. On entend par boues fraiches, des boues non hydrolysées

Il est ainsi possible d'abaisser la température des boues, et/ou de modifier leur concentration afin de rendre celles-ci (température et/ou concentration) compatibles avec les phénomènes biologiques impliqués le cas échéant dans la digestion qui suit.

Le choix du refroidissement et/ou de la dilution sera effectué en fonction de la nature des boues hydrolysées à digérer.

Une telle dilution pourra être nécessaire pour permettre une bonne digestion ultérieure de ces boues hydrolysées thermiquement. Ce mélange atteindra alors une température suffisamment basse et sera suffisamment diluée pour respecter la biologie du digesteur.

Egalement préférentiellement, le procédé selon l'invention comprend des étapes préalables de déshydratation et d'homogénéisation des boues à traiter en vue de leur acheminement vers l'injecteur-mélangeur dynamique primaire, ces étapes préalables conduisant à des boues présentant une siccité comprise entre plus de 20% et jusqu'à 35% de matières sèches. Pour mémoire on rappellera qu'en pratique les dispositifs de l'art antérieur ne permettaient pas d'hydrolyser efficacement des boues présentant une siccité supérieure à 20 %.

Selon une variante avantageuse du procédé selon l'invention, celui-ci comprend une étape consistant à adapter les conditions de mise en oeuvre de l'injecteur-mélangeur dynamique primaire et/ou de l'injecteur-mélangeur dynamique secondaire en fonction de la siccité des boues. Ainsi, lorsque le ou les injecteur-mélangeur dynamiques incluront un rotor à pâles, la vitesse de rotation de ces pâles pourra être modifiée en fonction de cette siccité de façon à permettre la réalisation d'un mélange uniforme même lorsque cette siccité sera élevée.

Selon un autre aspect de l'invention, celle-ci couvre également tout dispositif pour la mise en oeuvre d'un procédé selon l'une quelconque des variantes exposées ci-avant.

Selon l'invention, un tel dispositif comprend :
au moins un injecteur-mélangeur dynamique primaire ayant une sortie de mélange uniforme primaire ;
des moyens d'amenée de boues à traiter contenant de la matière organique dans ledit injecteur-mélangeur dynamique primaire ;
des moyens d'amenée de vapeur de récupération dans ledit injecteur-mélangeur dynamique primaire ;
au moins un injecteur-mélangeur dynamique secondaire ayant une sortie de mélange uniforme secondaire ;
des moyens d'amenée dudit mélange uniforme primaire dans ledit injecteur-mélangeur dynamique secondaire ;
des moyens d'amenée de vapeur vive dans ledit injecteur-mélangeur dynamique secondaire ;
un réacteur tubulaire d'hydrolyse thermique ;
des moyens d'amenée dudit mélange uniforme secondaire dans ledit réacteur tubulaire d'hydrolyse thermique ;
des moyens de production de ladite vapeur de récupération à partir dudit mélange uniforme secondaire hydrolysé obtenu en sortie dudit réacteur tubulaire, lesdits moyens de production comprenant une sortie de vapeur de récupération communiquant avec lesdits moyens d'amenée de vapeur de récupération ;
des moyens de refroidissement dudit mélange uniforme secondaire provenant desdits moyens de production de vapeur de récupération à une température permettant la digestion ultérieure de la matière organique hydrolysée qu'il contient.

Un tel dispositif selon la présente invention se distingue clairement de l'art antérieur divulgué dans WO2009/121873 par la caractéristique selon laquelle un injecteur-mélangeur dynamique primaire et un injecteur-mélangeur dynamique secondaire sont prévus en amont du réacteur tubulaire d'hydrolyse thermique et non pas intégrés au réacteur d'hydrolyse thermique. Comme précisé ci-dessus, l'utilisation d'un appareillage pour mélanger les boues à hydrolyser thermiquement et la vapeur d'eau, à savoir les injecteur-mélangeur dynamiques, et d'un appareillage distinct pour réaliser l'hydrolyse thermique des composés hydrolysables thermiquement contenus dans ces boues, à savoir un réacteur tubulaire, permet d'optimiser le fonctionnement de ce réacteur tubulaire d'hydrolyse thermique. Cette optimisation se traduit par l'obtention de boues hydrolysées présentant une teneur plus élevée en composés hydrolysés facilement digestibles au sein d'un digesteur et par la possibilité de pouvoir donner à ce réacteur tubulaire un volume plus faible.

Un tel dispositif selon l'invention permet donc de traiter par hydrolyse thermique des boues dans un volume de réacteur moindre, ce qui présente un avantage économique non négligeable par rapport à l'art antérieur.

Comme déjà précisé, on pourra utiliser différents types d'injecteurs mélangeurs dynamiques dans le cadre de la mise en oeuvre de la présente invention. Toutefois le dispositif selon celle-ci sera avantageusement pourvu d'injecteur-mélangeur dynamiques qui présentent une chambre munie d'un rotor à pâles ou à vis dont la vitesse de rotation pourra être adaptée en fonction de la siccité des boues comme indiqué précédemment. On notera que la géométrie des pâles pourra elle-même être adaptée en fonction de la siccité et de la viscosité des boues.

L'art antérieur selon le brevet WO2009/121873 prévoit dans sa partie descriptive générale à peu près toutes les formes de réacteur tubulaire possible. Toutefois les modes de réalisation de cette technique donnée dans ce document de brevet préconisent de réaliser ce réacteur horizontalement. Selon un mode de réalisation décrit dans ce document de brevet WO2009/121873, une entrée de boues à une extrémité du réacteur tubulaire est prévue, avec une injection de vapeur à proximité de cette extrémité, une sortie des boues hydrolysées étant prévue à l'autre extrémité de ce réacteur tubulaire, des moyens d'injection d'eau de refroidissement étant prévus au niveau de cette deuxième extrémité. Dans un autre mode de réalisation décrit dans ce document de brevet WO2009/121873, le réacteur tubulaire d'hydrolyse thermique présente une première partie verticale prolongée par une seconde partie horizontale plus longue. La raison pour laquelle chacun de ces modes de réalisations préférentielles présente une partie horizontale relativement longue résultent de la nécessité de mettre en contact la boue avec la vapeur pendant un temps de séjour suffisamment long pour que non seulement l'hydrolyse thermique se produise mais que préalablement à celle-ci, au sein du réacteur tubulaire, la vapeur d'eau injectée en début de réacteur puisse se condenser dans les boues afin de transférer à celles-ci l'énergie nécessaire à leur hydrolyse.

Selon l'invention, l'injection de vapeur ayant lieu en amont du réacteur grâce à l'utilisation d'injecteur-mélangeur dynamiques, c'est un mélange uniforme parfaitement mélangé qui arrive dans le réacteur, si bien que le réacteur en question n'a plus à faire office de condenseur mais seulement de réacteur d'hydrolyse thermique. Son volume peut donc être réduit par rapport à l'art antérieur. En effet, dans celui-ci, le réacteur doit faire office à la fois de condenseur et de réacteur ce qui lui confère un volume plus important et notamment une longueur importante que dans l'invention présente.

En outre, la chaleur des boues hydrolysées est exploitée en sortie du réacteur tubulaire pour produire de la vapeur dite de récupération qui sera injectée et mélangée aux boues à traiter au moyen de l'injecteur-mélangeur dynamique primaire placé en amont de l'injecteur-mélangeur dynamique secondaire dans lequel les boues sont mélangées avec la vapeur vive sous pression. Ceci permettra de réduire la quantité de vapeur vive sous pression injectée dans les boues à hydrolyser et le cas échéant de réduire la part du biogaz produit par la digestion ultérieure des boues hydrolysées employée à la production de cette vapeur vive, et d'augmenter de ce fait la part de ce biogaz employée à d'autres fins que celle de la mise en oeuvre du procédé d'hydrolyse des boues, par exemple à la production d'énergie excédentaire, comme par exemple de la chaleur ou de l'électricité, une injection de bio méthane dans le réseau ou autre.

Selon une première variante préférentielle, lesdits moyens de production de vapeur de récupération comprennent au moins un échangeur de chaleur comprenant une entrée communiquant avec la sortie dudit réacteur tubulaire, une entrée d'eau de refroidissement communiquant avec des moyens d'amenée d'eau, une sortie de vapeur de récupération et une sortie de boues hydrolysées refroidies.

Ceci permet de produire indirectement une vapeur de récupération plus propre, c'est-à-dire qui ne contient pas d'éléments tels que de la mousse, des particules, des incondensables ou autre, dont la présence peut nécessiter la mise en oeuvre de certains moyens d'évacuation.

Selon une deuxième variante préférentielle, lesdits moyens de production de vapeur de récupération comprennent au moins un réacteur de vapeur de flash dont l'entrée communique avec la sortie dudit réacteur tubulaire.

Ceci permet de produire directement de la vapeur de récupération sous la forme de vapeur de flash, en exploitant la chaleur des boues hydrolysées, sans mise en oeuvre d'un échangeur de chaleur ce qui constitue un avantage notamment sur le plan de la maintenance.

Selon une autre caractéristique préférentielle, lesdits moyens de refroidissement dudit mélange uniforme secondaire hydrolysé comprennent des moyens de dilution dudit mélange uniforme secondaire hydrolysé à l'eau et/ou avec des boues fraiches, et/ou des moyens d'échange de chaleur au sein d'au moins un échangeur de chaleur.

Il est ainsi possible d'abaisser la température des boues, et/ou de modifier leur concentration afin de rendre celles-ci (température et/ou concentration) compatibles avec les phénomènes biologiques impliqués le cas échéant dans la digestion qui suit.

Le choix du refroidissement et/ou de la dilution sera effectué en fonction de la nature des boues hydrolysées à digérer.

Selon l'invention, les réacteurs d'hydrolyse thermique mis en oeuvre pourront présenter des formes variées. Toutefois, selon une variante préférentielle, le réacteur tubulaire d'hydrolyse thermique sera vertical et présentera une entrée à son extrémité inférieure et une sortie à son extrémité supérieure, ou inversement.

Selon une autre variante préférentielle, ce réacteur tubulaire d'hydrolyse thermique présentera une première portion verticale directement prolongée par une deuxième portion verticale, l'entrée du réacteur étant prévue en partie inférieure de la première portion verticale et la sortie du réacteur étant prévue en partie inférieure de ladite deuxième portion verticale.

Selon une autre variante préférentielle, ce réacteur tubulaire d'hydrolyse thermique présentera une première portion verticale directement prolongée par une deuxième portion verticale, l'entrée du réacteur étant prévue en partie supérieure de la première portion verticale et la sortie du réacteur étant prévue en partie supérieure de ladite deuxième portion verticale.

On notera que dans le cadre de la présente description on entend par « première portion verticale directement prolongée par une deuxième section verticale » comme couvrant les réalisations selon laquelle les deux parties verticales seraient reliées par une connexion horizontale non considérée comme zone de réaction.

Selon encore une autre variante, ledit réacteur tubulaire d'hydrolyse thermique présente une première portion verticale reliée à une deuxième portion verticale, l'entrée du réacteur étant prévue en partie supérieure de ladite première portion verticale et la sortie dudit réacteur étant prévue en partie inférieure de ladite deuxième portion verticale, ou inversement.

Egalement avantageusement, le dispositif comprend des moyens destinés à maintenir la pression dans le réacteur tubulaire d'hydrolyse thermique comme par exemple au moins une pompe et/ou une vanne, préférentiellement une pompe à vis excentrée.

### 5. Liste des figures

L'invention ainsi que les différents avantages qu'elle présente seront plus facilement compris grâce à la description de modes de réalisation donnés en référence aux figures dans lesquelles :
- la figure 1 représente de manière schématique et générale une vue d'un dispositif pour l'hydrolyse thermique de boues selon l'invention intégré dans une installation incluant un digesteur prévu en aval de celle-ci, selon lequel la chaleur des boues hydrolysées est exploitée pour produire de la vapeur de récupération, laquelle est mélangée aux boues à traiter au moyen d'un injecteur-mélangeur dynamique primaire placé en amont de l'injecteur dynamique secondaire dans lequel les boues sont mélangées à la vapeur vive ;
- les figures 2a et 2b représentent deux formes de réacteur tubulaire d'hydrolyse thermique pouvant être mises en oeuvre dans le cadre de la présente invention ;
- les figures 3a et 3b représentent deux autres formes de réacteur tubulaire d'hydrolyse thermique pouvant être mises en oeuvre dans le cadre de la présente invention ;
- les figures 4a et 4b représentent encore deux autres formes de réacteur tubulaire d'hydrolyse thermique pouvant être mises en oeuvre dans le cadre de la présente invention ;
- les figures 5a et 5b représentent encore deux autres formes de réacteur tubulaire d'hydrolyse thermique pouvant être mises en oeuvre dans le cadre de la présente invention ;
- la figure 6 illustre un premier mode de réalisation d'un dispositif selon l'invention dans lequel la vapeur de récupération est produite indirectement au sein d'un échangeur de chaleur ;
- les figures 7, 8, 9 et 10 illustrent des variantes de moyens de refroidissement et/ou de dilution des boues hydrolysées provenant du réacteur d'hydrolyse d'un dispositif selon le premier mode de réalisation ;
- la figure 11 illustre un deuxième mode de réalisation d'un dispositif selon l'invention dans lequel la vapeur de récupération est produite directement au sein d'un réacteur de flash ;
- les figures 12, 13 et 14 illustrent des variantes de moyens de refroidissement et/ou de dilution des boues hydrolysées provenant du réacteur d'hydrolyse selon le deuxième mode de réalisation ;

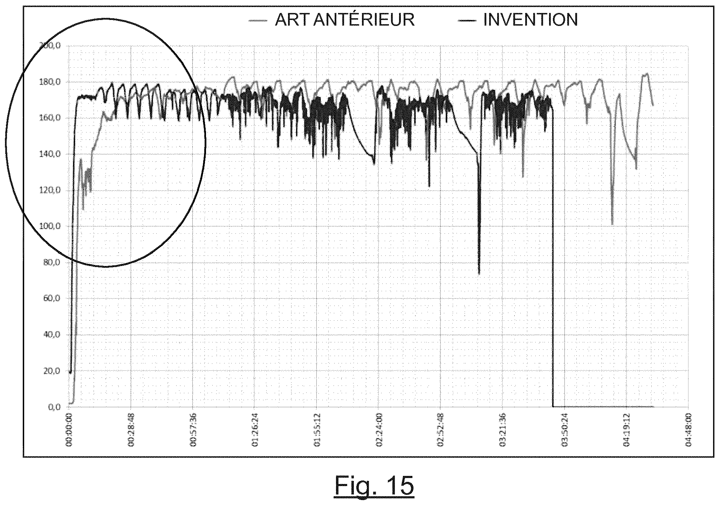

- la figure 15 représente un graphe montrant d'une part l'évolution de la température au sein du réacteur tubulaire d'une installation de l'art antérieur conforme aux documents de brevet WO2009/121873 n'intégrant pas d'injecteur mélangeur dynamique mais dans lequel la vapeur et la boue sont amenées en tête de réacteur, et d'autre part l'évolution de la température au sein du réacteur tubulaire d'une installation correspondant à l'invention intégrant des injecteur-mélangeur dynamiques dans lesquels la vapeur de récupération puis de la vapeur vive et la boue sont mélangés puis acheminées sous forme de mélange homogène en tête du réacteur d'hydrolyse thermique.

### 6. Description de modes de réalisation

### 6.1. Architecture générale

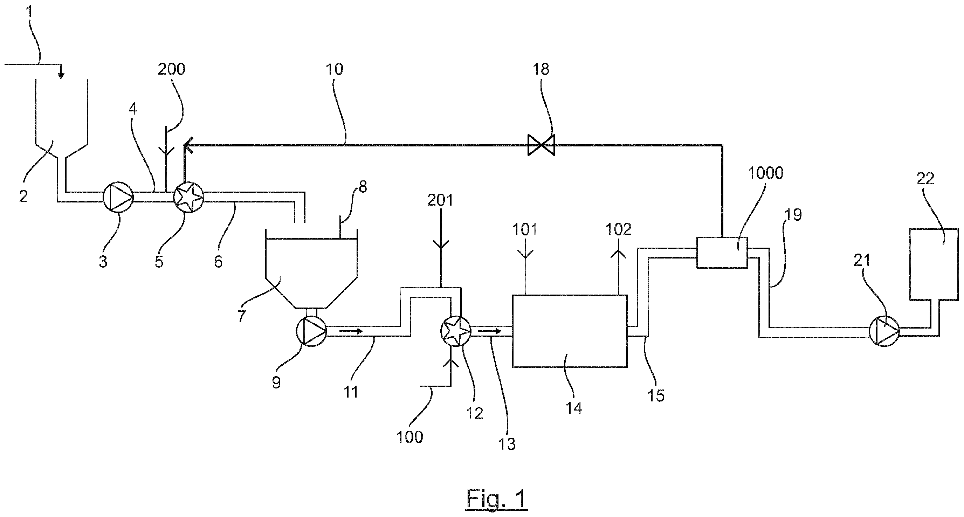

En référence à la figure 1, un dispositif selon l'invention est illustré de manière générale et schématique. Ce dispositif est intégré à une installation incluant un digesteur 22 qui ne fait pas partie en tant que tel du dispositif selon l'invention.

Une telle installation peut être utilisée pour mettre en oeuvre un procédé de lyse-digestion (LD) mais on notera qu'il sera également possible d'intégrer le procédé selon l'invention dans des configurations connues de l'art antérieur dites digestion-lyse (DL) ou digestion-lyse-digestion (DLD), sachant que dans la configuration dite DL une partie de la boue est hydrolysée et retourne ensuite dans le digesteur.

En référence à la figure 1, des boues déshydratées sont acheminées par une canalisation 1 vers une trémie 2 par exemple pourvue de deux vis sans fin permettant de les homogénéiser.

Les boues déshydratées et homogénéisées provenant de la trémie 2 sont pompées grâce à une pompe 3 dans une canalisation 4 servant de moyens d'amenée de ces boues à un injecteur-mélangeur dynamique primaire 5. Cet injecteur-mélangeur dynamique primaire 5 est également pourvu de moyens d'injection 10 de vapeur de récupération dont le mode de production sera décrit plus en détail par la suite. La pression de cette vapeur de récupération sera préférentiellement comprise entre 1 et 10 bar a. Sa température sera préférentiellement comprise entre 100 et 180°C. Cet injecteur-mélangeur dynamique primaire 5 peut également être alimenté en vapeur vive lors des phases de démarrage.

L'injecteur-mélangeur dynamique primaire 5 permet de produire un mélange uniforme primaire de boues chauffées par la vapeur de récupération. La température de ce mélange sera préférentiellement inférieure à 100°C.

L'injecteur-mélangeur dynamique primaire 5 pourra au besoin être nettoyé par exemple au moyen d'une arrivée d'eau de lavage 200 débouchant dans la canalisation 4.

Le mélange uniforme primaire provenant de l'injecteur-mélangeur dynamique primaire 5 est introduit via une canalisation 6 dans une cuve tampon 7 dans laquelle des gaz incondensables seront récupérées et évacués par une conduite 8.

Les boues provenant de la cuve tampon 7, en l'occurrence le mélange uniforme primaire, sont pompées, grâce à une autre pompe d'alimentation 9, dans une canalisation 11 servant de moyen d'amenée de ces boues à l'entrée d'un injecteur-mélangeur dynamique secondaire 12.

Cet injecteur-mélangeur dynamique secondaire 12 est pourvu de moyens d'injection de vapeur vive 100 générée par un générateur de vapeur comme par exemple une chaudière, ou tout autre moyen de production de vapeur comme par exemple un système de cogénération, non représenté sur la figure 1. Il permet de produire un mélange uniforme secondaire de boues chauffées par la vapeur vive.

L'injecteur-mélangeur dynamique secondaire pourra au besoin être nettoyé par exemple au moyen d'une arrivée d'eau de lavage 201 débouchant dans la canalisation 11.

A la sortie du mélangeur dynamique secondaire 12, une canalisation 13 permet d'acheminer le mélange uniforme secondaire réalisé au sein de celui-ci vers un réacteur d'hydrolyse thermique 14.

Le traitement au sein de ce réacteur d'hydrolyse thermique 14 est effectué à une température comprise entre 150°C et 170 °C, l'intérieur du réacteur étant maintenu sous une pression comprise entre 8 bar a et 10 bar a (à ce sujet, on notera que des températures et des pressions plus faibles ou plus fortes pourront être mises en oeuvre en fonction notamment de la siccité des boues).

Le réacteur d'hydrolyse thermique 14 pourra le cas échéant être nettoyé par injection d'eau via une entrée 101 d'eau de lavage lors de phases de nettoyage pouvant être effectuées lors du démarrage de l'installation ou lors de phase de maintenance de celle-ci, alors que d'éventuels gaz incondensables pourront être évacués du réacteur via la purge 102.

Les boues hydrolysées dans le réacteur d'hydrolyse thermique 14 sont ensuite acheminées par une canalisation 15 vers des moyens de production de vapeur de récupération 1000. Ces moyens de production permettent de produire de la vapeur de récupération à partir du mélange uniforme secondaire hydrolysé provenant du réacteur d'hydrolyse 14, en d'autres termes à partir des boues hydrolysées.

La vapeur de récupération produite à partir de la chaleur des boues hydrolysées est acheminée dans l'injecteur-mélangeur dynamique primaire 5 via la canalisation 10 servant de moyen d'injection de vapeur de récupération dans celui-ci.

Une vanne 18, ou tout organe déprimogène, ayant une fonction de maintien en pression des moyens de production de vapeur de récupération, peut être placée sur la canalisation 10.

Les boues hydrolysées provenant des moyens de production de vapeur de récupération 1000 sont acheminées dans une canalisation 19 débouchant dans un digesteur 22. Cette canalisation 19 comporte éventuellement une pompe 21 en amont du digesteur 22.

L'installation comprend des moyens de dilution et/ou de refroidissement des boues hydrolysées provenant des moyens de production de vapeur de récupération 1000 (non représentés).

Les boues hydrolysées et refroidies et/ou diluées sont acheminées dans le digesteur 22 via la canalisation 19.

Les boues hydrolysées thermiquement envoyées vers le digesteur 22 pourront être, du fait qu'elles ont subies une hydrolyse thermique, facilement digérées.

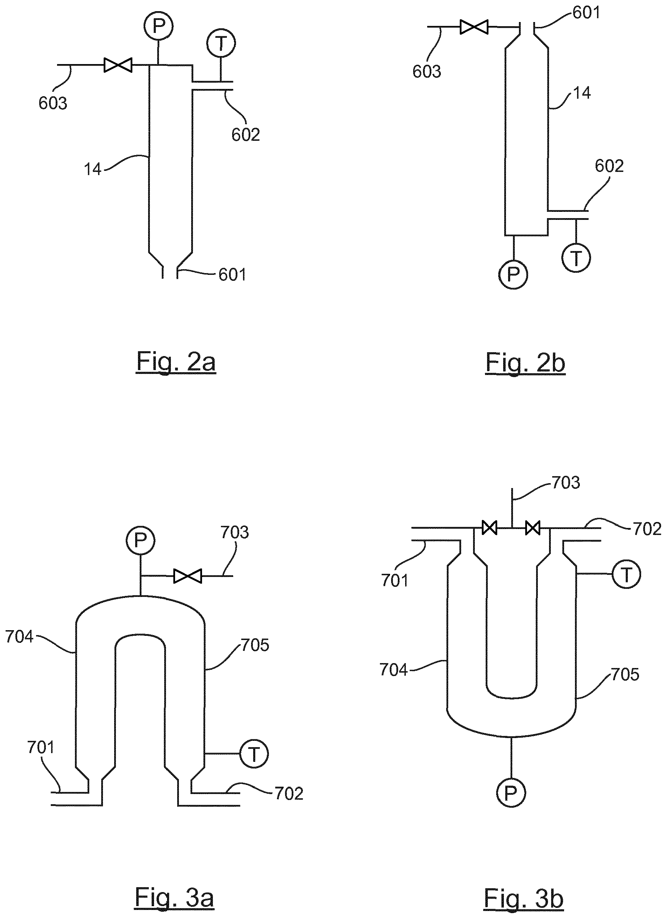

Il est bien précisé que la représentation faite à la figure 1 d'une installation intégrant un dispositif selon l'invention est une représentation schématique. Notamment, la forme du réacteur 14 dans lequel l'hydrolyse thermique du mélange uniforme de boues chauffées est réalisée pourra revêtir différentes formes. Quelques unes de ces formes, entre autres formes possibles, sont données en référence aux figures 2a, 2b, 3a, 3b, 4a, 4b, 5a, 5b.

Selon la forme représentée à la figure 2a, le réacteur d'hydrolyse thermique 14 présente une forme verticale. Le réacteur 14 est pourvu dans sa partie inférieure d'une arrivée 601 de mélange uniforme de boues chauffées avec de la vapeur de récupération puis de la vapeur vive et dans sa partie supérieure, d'une sortie du réacteur 602. Une purge 603 est prévue pour évacuer les éventuels gaz incondensables et des moyens de mesure de la pression P de la température T régnant à l'intérieur du réacteur 14 sont également prévus dans la partie supérieure de celui-ci.

Selon la forme représentée à la figure 2b, le réacteur d'hydrolyse thermique 14 présente une forme verticale. Le réacteur 14 est pourvu dans sa partie supérieure d'une arrivée 601 de mélange uniforme de boues chauffées avec de la vapeur de récupération puis de la vapeur vive et dans sa partie inférieure, d'une sortie du réacteur 602. Une purge 603 est prévue pour évacuer les éventuels gaz incondensables dans la partie supérieure et des moyens de mesure de la pression P de la température T régnant à l'intérieur du réacteur 14 sont également prévus dans la partie inférieure de celui-ci.

En référence à la figure 3a, le réacteur d'hydrolyse thermique 14 présente une première partie verticale 704 pourvue en partie inférieure d'une arrivée 701 de mélange uniforme de boues chauffées. Cette première partie verticale 704 est reliée directement à une seconde partie verticale 705 pourvue en partie inférieure d'une évacuation 702 des boues hydrolysées. Une purge 703 est prévue au niveau de la jonction entre ces deux parties verticales pour évacuer les éventuels gaz incondensables. Des moyens de mesure de la pression P et de la température T dans le réacteur 14 sont également prévus. On notera que dans cette configuration, la seconde partie verticale 705 est directement reliée à la première partie verticale 704 sans partie horizontale entre les deux.

En référence à la figure 3b, le réacteur d'hydrolyse thermique 14 présente une première partie verticale 704 pourvue en partie supérieure d'une arrivée 701 de mélange uniforme de boues chauffées. Cette première partie verticale 704 est reliée directement à une seconde partie verticale 705 pourvue en partie supérieure d'une évacuation 702 des boues hydrolysées. Une purge 703 est prévue au niveau de la jonction entre ces deux parties verticales pour évacuer les éventuels gaz incondensables. Des moyens de mesure de la pression P et de la température T dans le réacteur 14 sont également prévus. On notera que dans cette configuration, la seconde partie verticale 705 est directement reliée à la première partie verticale 704 sans partie horizontale entre les deux.

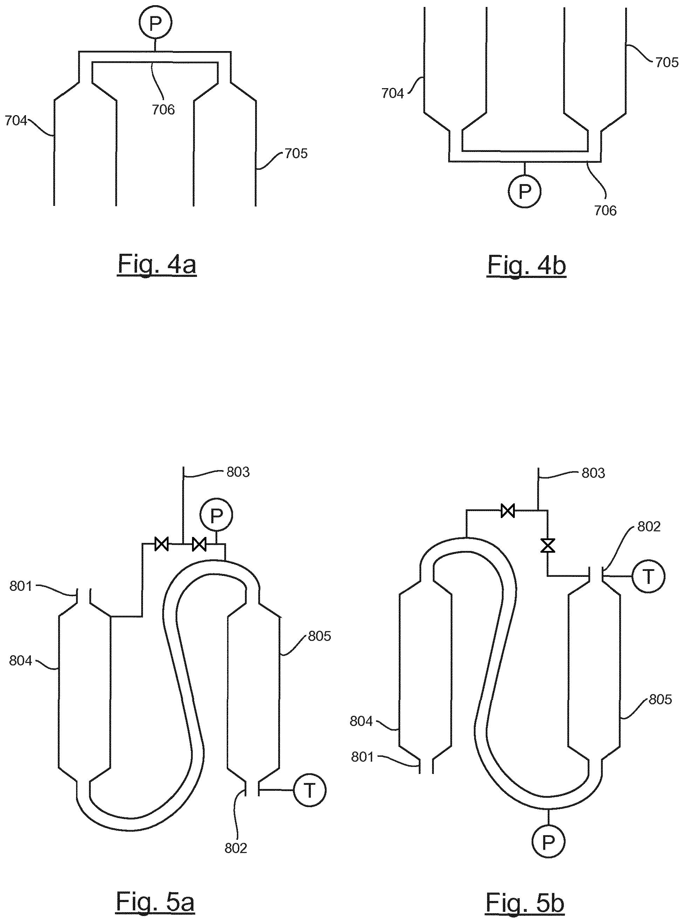

Dans la variante illustrée à la figure 4a, la seconde partie verticale 705 et la première partie verticale 704 sont reliées l'une à l'autre en partie supérieure au moyen d'une partie horizontale 706 entre les deux. Des moyens de mesure de la pression P et de la température T dans le réacteur 14 sont également prévus.

Dans la variante illustrée à la figure 4b, la seconde partie verticale 705 et la première partie verticale 704 sont reliées l'une à l'autre en partie inférieure au moyen d'une partie horizontale 706 entre les deux. Des moyens de mesure de la pression P et de la température T dans le réacteur 14 sont également prévus.

En référence à la figure 5a, le réacteur d'hydrolyse thermique 14 présente une première section verticale 804 pourvue en partie supérieure d'une arrivée 801 de mélange uniforme de boues chauffées. Cette première partie verticale 804 est reliée directement à une seconde partie verticale 805 pourvue en partie inférieure d'une évacuation 802 des boues hydrolysées. Une purge 803 est prévue au niveau de la jonction entre ces deux parties verticales pour évacuer les éventuels gaz incondensables. Des moyens de mesure de la pression P et de la température T dans le réacteur 14 sont également prévus.

En référence à la figure 5b, le réacteur d'hydrolyse thermique 14 présente une première section verticale 804 pourvue en partie inférieure d'une arrivée 801 de mélange uniforme de boues chauffées. Cette première partie verticale 804 est reliée directement à une seconde partie verticale 805 pourvue en partie supérieure d'une évacuation 802 des boues hydrolysées. Une purge 803 est prévue au niveau de la jonction entre ces deux parties verticales pour évacuer les éventuels gaz incondensables. Des moyens de mesure de la pression P et de la température T dans le réacteur 14 sont également prévus.

### 6.2. Exemple d'un premier mode de réalisation : échangeur de chaleur

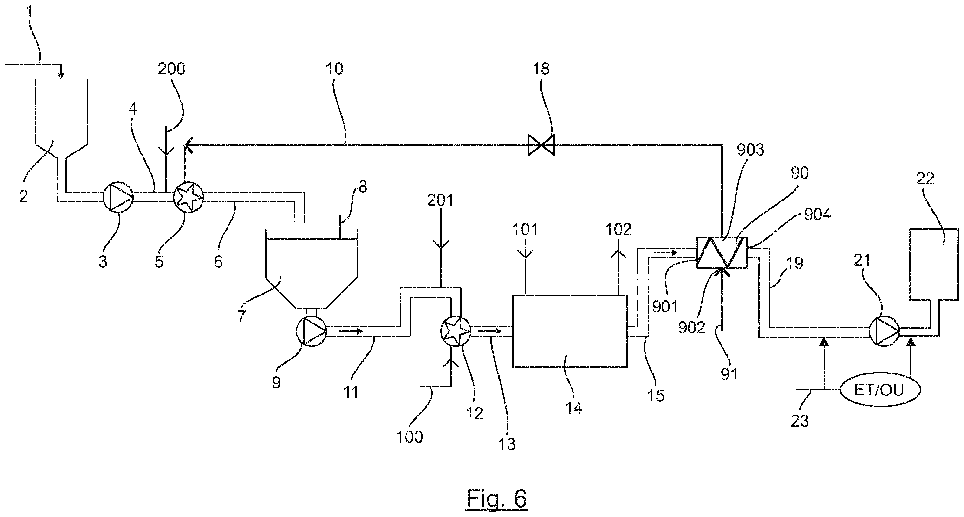

En référence à la figure 6, un dispositif selon un premier mode de réalisation de l'invention est décrit de façon schématique.

Seules les différences entre le dispositif illustré de manière générale à la figure 1 et le dispositif selon ce premier mode de réalisation illustré à la figure 6 sont décrites.

Selon ce premier mode de réalisation, les moyens de production de la vapeur de récupération 1000 comprennent un échangeur de chaleur 90.

Cet échangeur de chaleur 90 comprend une première entrée 901 dans laquelle débouche la canalisation 15 via laquelle les boues hydrolysées provenant du réacteur d'hydrolyse thermique 14 sont acheminées dans cet échangeur 90. Il comprend une deuxième entrée 902 à laquelle sont reliés des moyens d'amenée d'eau comprenant ici une canalisation 91. Il comprend également une sortie de vapeur de récupération 903 à laquelle est reliée la canalisation d'injection de vapeur de récupération 10 qui débouche dans l'injecteur-mélangeur dynamique primaire 5. Cet échangeur de chaleur 90 comprend encore une sortie de boues hydrolysées refroidies 904.

La sortie de boues hydrolysées refroidies 904 est reliée à une canalisation 19 débouchant dans un digesteur 22.

Cette canalisation 19 porte éventuellement une pompe 21 en amont du digesteur 22. Cette pompe 21, ou tout autre organe déprimogène équivalent comme par exemple une vanne, permet de maintenir la pression dans le réacteur d'hydrolyse thermique 14.

Dans ce mode de réalisation, les moyens de dilution et/ou de refroidissement comprennent des moyens d'amenée, comme une ou plusieurs canalisations 23, d'eau et/ou de boues fraîches débouchant en amont et/ou en aval de la pompe 21.

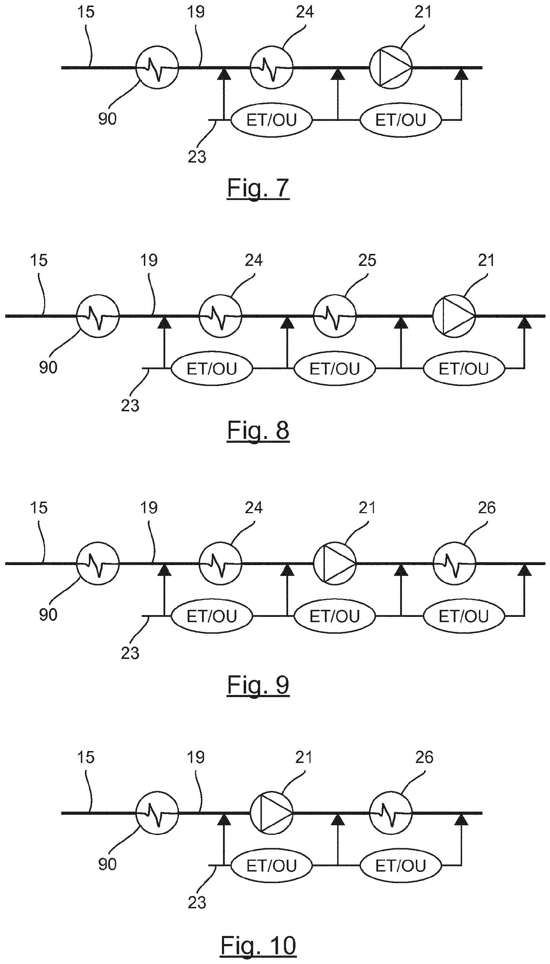

Dans une variante illustrée à la figure 7, ces moyens de dilution et/ou de refroidissement comprennent :
- un échangeur de chaleur 24 placé en amont de la pompe 21, et
- des moyens d'amenée, comme une ou plusieurs canalisations 23, d'eau et/ou de boues fraîches débouchant en amont et/ou en aval de l'échangeur de chaleur 24 et/ou de la pompe 21.

Dans une variante illustrée à la figure 8, ces moyens de dilution et/ou de refroidissement comprennent :
- deux échangeurs de chaleur 24 et 25 placés en série en amont de la pompe 21, et
- des moyens d'amenée, comme une ou plusieurs canalisations 23, d'eau et/ou de boues fraîches débouchant en amont et/ou en aval du premier et/ou du deuxième échangeur de chaleur 24 et 25 et/ou de la pompe 21.

Dans une variante illustrée à la figure 9, ces moyens de dilution et/ou de refroidissement comprennent :
- un échangeur de chaleur 24 placé en amont de la pompe 21 ;
- un échangeur de chaleur 26 placé en aval de la pompe 21, et
- des moyens d'amenée, comme une ou plusieurs canalisations 23, d'eau et/ou de boues fraîches débouchant en amont et/ou en aval d'un ou des échangeurs de chaleur 24 et 26 et/ou de la pompe 21.

Dans une variante illustrée à la figure 10, ces moyens de dilution et/ou de refroidissement comprennent :
- un échangeur de chaleur 26 placé en aval de la pompe 21, et
- des moyens d'amenée, comme une ou plusieurs canalisations 23, d'eau et/ou de boues fraîches débouchant en amont et/ou en aval de l'échangeur de chaleur 26 et/ou de la pompe 21.

### 6.3. Exemple d'un deuxième mode de réalisation : réacteur flash

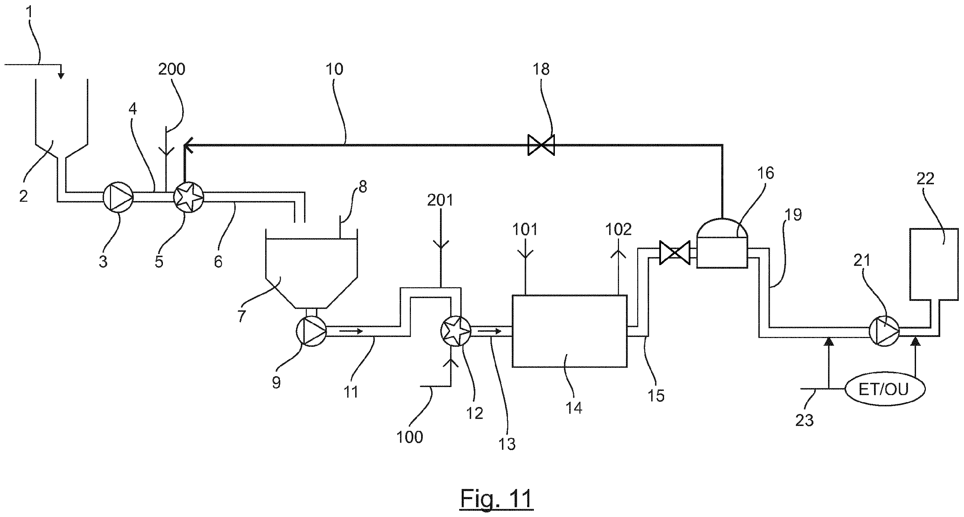

En référence à la figure 11, un dispositif selon un deuxième mode de réalisation de l'invention est décrit de façon schématique.

Seules les différences entre le dispositif illustré de manière générale à la figure 1 et le dispositif selon ce deuxième mode de réalisation illustré à la figure 11 sont décrites.

Dans ce mode de réalisation, les moyens de production de vapeur de récupération comprennent un réacteur de flash 16.

La pression et la température des boues hydrolysées en sortie de réacteur 14 sont abaissées fortement et rapidement à l'intérieur du réacteur de flash 16 afin de produire de la vapeur de flash, dont la pression sera préférentiellement comprise entre 1 et 10 bar a, et la température sera préférentiellement comprise entre 100 et 180°C.

La vapeur de flash ainsi produite, qui constitue de la vapeur de récupération produite directement à partir de la chaleur des boues hydrolysées, est acheminée dans l'injecteur-mélangeur dynamique primaire 5 via la canalisation 10 servant de moyen d'injection de vapeur de récupération dans celui-ci.

Une vanne 18, ou tout organe déprimogène, ayant une fonction de maintien en pression du réacteur de flash, peut être placée sur la canalisation 10.

Une vanne 17, ou tout organe déprimogène, peut être placée sur la canalisation 15 entre la sortie de réacteur d'hydrolyse thermique 14 et l'entrée du réacteur de flash 16. Cette vanne 17 permettra de réguler la pression des boues hydrolysées circulant dans la canalisation 15 pour maintenir la pression et la température dans le réacteur d'hydrolyse thermique 14.

Les boues hydrolysées provenant du réacteur de flash 16 sont acheminées dans la canalisation 19 débouchant dans le digesteur 22. Cette canalisation 19 porte éventuellement une pompe 21 en amont du digesteur 22.

L'installation comprend des moyens de dilution et/ou de refroidissement des boues hydrolysées provenant du réacteur de flash 16.

Dans ce mode de réalisation, ces moyens de dilution et/ou de refroidissement comprennent des moyens d'amenée, comme une ou plusieurs canalisations 23 , d'eau et/ou de boues fraîches débouchant en amont et/ou en aval de la pompe 21.

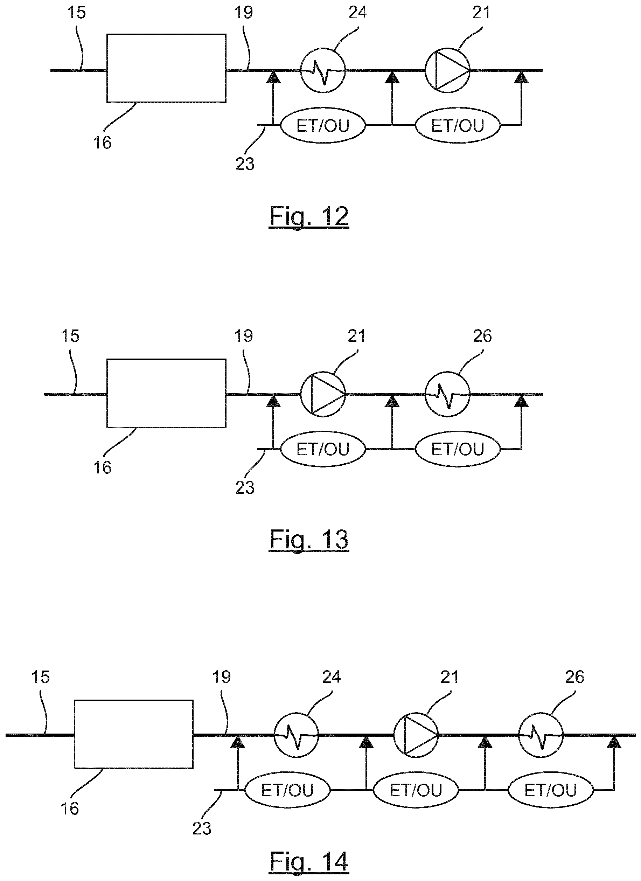

Dans une variante illustrée à la figure 12, ces moyens de dilution et/ou de refroidissement comprennent :
- un échangeur de chaleur 24 placé en amont de la pompe 21, et
- des moyens d'amenée, comme une ou plusieurs canalisations 23 , d'eau et/ou de boues fraîches débouchant en amont et/ou en aval de l'échangeur de chaleur 24 et/ou de la pompe 21.

Dans une variante illustrée à la figure 13, ces moyens de dilution et/ou de refroidissement comprennent :
- un échangeur de chaleur 26 placé en aval de la pompe 21, et
- des moyens d'amenée, comme une ou plusieurs canalisations 23 , d'eau et/ou de boues fraîches débouchant en amont et/ou en aval de l'échangeur de chaleur 26 et/ou de la pompe 21.

Dans une variante illustrée à la figure 14, ces moyens de dilution et/ou de refroidissement comprennent :
- un échangeur de chaleur 24 placé en amont de la pompe 21 ;
- un échangeur de chaleur 26 placé en aval de la pompe 21, et
- des moyens d'amenée, comme une ou plusieurs canalisations 23, d'eau et/ou de boues fraîches débouchant en amont et/ou en aval d'un ou des échangeurs de chaleur 24 et 26 et/ou de la pompe 21.

Les boues hydrolysées et refroidies et/ou diluées sont acheminées dans le digesteur 22 via la canalisation 19.

Les boues hydrolysées thermiquement envoyées vers le digesteur 22 pourront être, du fait qu'elles ont subies une hydrolyse thermique, facilement digérées.

### 6.4. Essais

La figure 15 montre l'évolution dans le temps de la température régnant à l'intérieur du réacteur d'hydrolyse thermique :
- d'une part dans le cadre de l'invention mettant en oeuvre des injecteur-mélangeur dynamiques prévus en amont du réacteur d'hydrolyse thermique ; et,
- d'autre part dans le cadre d'une installation similaire selon l'art antérieur dans laquelle aucun injecteur-mélangeur dynamique n'est utilisé, la vapeur étant injectée en pied de réacteur.

En référence à cette figure 15, on peut constater que dans le cadre de la présente invention, la température régnant à l'intérieur du réacteur monte progressivement jusqu'à atteindre et à conserver la température de consigne permettant la lyse thermique optimisée des composés organiques hydrolysable contenue dans les boues traitées.

Dans l'installation selon l'art antérieur, la température observée dans le réacteur est d'emblée celle de la vapeur injectée. Elle subit ensuite des variations importantes. Ceci traduit le fait que, dans la technique selon cet art antérieur, il ne se produit pas systématiquement de mélange intime de la vapeur avec les boues. Au contraire, les fluctuations de température observées au sein du réacteur traduisent l'existence d'écoulements polyphasiques au sein de celui-ci. Dans l'exemple ici décrit, la vapeur étant injectée à une vitesse (en pratique bien supérieure à 5m/s) beaucoup plus élevée que la boue (en pratique bien inférieure à 3m/s), elle se trouve des passages préférentiels au travers de celle-ci et ne se mélange pas intimement avec elle et ne vient pas lui céder son énergie efficacement, c'est-à-dire une partie de la vapeur n'est pas condensée dans la boue.

Tout au contraire, grâce à l'utilisation d'injecteur-mélangeur dynamiques selon l'invention en amont du réacteur d'hydrolyse, le mélange parvenant à ce réacteur est parfaitement homogène et liquide. Il peut donc s'écouler en flux piston dans celui-ci. La température de consigne est conservée pendant tout le temps de séjour dans le réacteur. L'énergie de la vapeur est donc transférée de façon optimisée aux boues et l'hydrolyse des composés difficilement biodégradables peut être réalisée efficacement.

On notera également que grâce à l'invention, la quantité d'énergie théorique pour hydrolyser une quantité donnée de boues correspond peu ou prou à la quantité effectivement mise en oeuvre pour obtenir cette hydrolyse. A ce sujet on notera que le calcul de l'énergie nécessaire pour augmenter la température d'un fluide d'une température A à une température B est facile à réaliser. Dans le cadre des essais réalisés par la Déposante, le débit de vapeur théorique calculé a été de 25 kilogrammes de vapeur à 13 bar a par heure et les essais ont montré que c'était exactement ce débit de vapeur qui était effectivement nécessaire pour hydrolyser efficacement les boues.

Dans le cadre de l'installation selon l'art antérieur, il a été démontré que le mélange entre la boue à hydrolyser et la vapeur était imparfait puisque la quantité de vapeur effectivement injectée pour chauffer la boue (15kg/h) était inférieure à la quantité théoriquement calculée (25kg/h). Une certaine quantité de vapeur n'était donc pas condensée dans la boue. Ces essais confirment l'intérêt de la présente invention.

Enfin on notera que l'invention permet de mettre en oeuvre des réacteurs présentant un volume entre 20 et 25 % inférieur aux volumes de réacteur de l'art antérieur.

### 6.5. Avantages

Les techniques selon ces premier et deuxième modes de réalisation permettent une hydrolyse optimale de boues ayant une siccité supérieure à 20%.

Le besoin en vapeur vive pour l'hydrolyse thermique est d'autant plus faible que la température des boues à hydrolyser à l'amont de l'injecteur mélangeur dynamique secondaire est élevée. Le mélange de vapeur de récupération et de boues à hydrolyser proposé permet de réaliser une pré-montée en température des boues à hydrolyser.

Par conséquent, les techniques selon ces premier et deuxième modes de réalisation présentent en outre l'avantage de permettre de réduire la quantité de vapeur vive nécessaire à la réalisation de l'hydrolyse thermique, et de réduire la consommation énergétique requise à la production de cette vapeur vive.

Dans la mesure où les boues hydrolysées sont ultérieurement digérées, et que le biogaz généré au cours de cette digestion est en principe utilisé, pour partie, pour produire la vapeur vive nécessaire à l'hydrolyse thermique, l'autre partie en excès étant utilisé pour produire par exemple de l'électricité, ces variantes rendent possible l'utilisation d'une partie plus importante de ce biogaz en excès à la production d'énergie excédentaire, par exemple électrique ou thermique, susceptible d'être employée à une autre fin que celle de l'hydrolyse thermique.

## Revendications

1. Procédé d'hydrolyse thermique en continu de boues à traiter contenant de la matière organique, ledit procédé comprenant les étapes consistant à :
déshydrater et homogénéiser lesdites boues à traiter pour obtenir des boues présentant une siccité supérieure à 20 % et jusqu'à 35 % en poids de matières sèches ;
réaliser simultanément l'injection de vapeur de récupération dans lesdites boues et le mélange desdites boues avec ladite vapeur de récupération au moyen d'un injecteur-mélangeur dynamique primaire présentant une chambre et un rotor à pales, de façon à obtenir un mélange uniforme primaire de boues préchauffées ;
acheminer ledit mélange uniforme primaire vers un injecteur-mélangeur dynamique secondaire présentant une chambre et un rotor à pales, et réaliser simultanément l'injection de vapeur vive dans ledit mélange uniforme primaire et le mélange dudit mélange uniforme primaire avec ladite vapeur vive, de façon à obtenir un mélange uniforme secondaire de boues chauffées à la température d'hydrolyse thermique souhaitée ;
acheminer ledit mélange uniforme secondaire vers un réacteur tubulaire sous pression et provoquer l'écoulement essentiellement de type piston de ce mélange uniforme secondaire dans ledit réacteur selon un temps de séjour suffisant et à une température suffisante pour permettre l'hydrolyse thermique de la matière organique présente dans ce mélange uniforme secondaire ;
produire ladite vapeur de récupération au sein de moyens de production de vapeur de récupération à partir dudit mélange uniforme secondaire hydrolysé obtenu en sortie dudit réacteur tubulaire ;
refroidir ledit mélange uniforme secondaire hydrolysé à sa sortie desdits moyens de production de vapeur de récupération à une température permettant la digestion ultérieure de la matière organique hydrolysée qu'il contient.

2. Procédé selon la revendication 1, **caractérisé en ce que** ladite étape consistant à produire de la vapeur de récupération comprend :
une étape consistant à acheminer ledit mélange uniforme secondaire hydrolysé à sa sortie dudit réacteur tubulaire à l'entrée d'un échangeur de chaleur ;
une étape consistant à acheminer de l'eau à une autre entrée dudit échangeur de chaleur ;
ledit mélange uniforme secondaire hydrolysé transférant au moins en partie sa chaleur à ladite eau pour produire indirectement ladite vapeur de récupération.

3. Procédé selon la revendication 1, **caractérisé en ce que** ladite étape consistant à produire de la vapeur de récupération comprend une étape consistant à acheminer ledit mélange uniforme secondaire hydrolysé à sa sortie dudit réacteur tubulaire dans un réacteur de flash au sein duquel la pression et la température dudit mélange uniforme secondaire hydrolysé sont abaissées rapidement pour produire directement de la vapeur de flash, ladite vapeur de flash constituant ladite vapeur de récupération.

4. Procédé selon l'une quelconque des revendications 1 à 3, **caractérisé en ce que** la pression de ladite vapeur de récupération est comprise entre 1 et 10 bar a.

5. Procédé selon l'une quelconque des revendications 1 à 4, **caractérisé en ce que** la température de ladite vapeur de récupération est comprise entre 100°C et 180°C.

6. Procédé selon l'une quelconque des revendications 1 à 5, **caractérisé en ce que** la température desdites boues acheminées à l'entrée dudit injecteur-mélangeur primaire est inférieure à 60°C.

7. Procédé selon l'une quelconque des revendications 1 à 6, **caractérisé en ce que** température dudit mélange uniforme primaire en sortie dudit injecteur-mélangeur primaire est inférieure à 100°C.

8. Procédé selon l'une quelconque des revendications 1 à 7, **caractérisé en ce que** ledit mélange uniforme secondaire présente, en sortie dudit injecteur-mélangeur secondaire, une température comprise entre 100°C et 200°C et une pression comprise entre 1 bar a et 22 bar a.

9. Procédé selon l'une quelconque des revendications 1 à 8, **caractérisé en ce que** ledit mélange uniforme secondaire présente, en sortie dudit injecteur-mélangeur secondaire, une température comprise entre 150°C et 170°C et une pression comprise entre 5 bar a et 15 bar a.

10. Procédé selon l'une quelconque des revendications 8 ou 9 **caractérisé en ce que** la vapeur d'eau utilisée pour réaliser ledit mélange uniforme secondaire présente une température comprise entre 100 °C et 220°C, préférentiellement entre 180 °C et 200 °C, et une pression comprise entre 1 bar a et 23 bar a, préférentiellement entre 10 bar a et 16 bar a.

11. Procédé selon l'une quelconque des revendications précédentes, **caractérisé en ce que** ledit temps de séjour dudit mélange uniforme secondaire dans ledit réacteur est compris entre 10 minutes et 2 heures, préférentiellement entre 20 minutes et 40 minutes

12. Procédé selon la revendication 11, **caractérisé en ce que** ledit temps de séjour dudit mélange uniforme secondaire dans ledit réacteur est d'au moins 20 minutes, et **en ce que** la température dudit mélange uniforme secondaire dans ledit réacteur est d'au moins 100°C de façon telle qu'il permette l'hygiénisation desdites boues contenues dans celui-ci.

13. Procédé selon l'une quelconque des revendications précédentes, **caractérisé en ce que** ladite étape consistant à refroidir ledit mélange uniforme hydrolysé comprend au moins une dilution à l'eau et/ou avec des boues fraiches, et/ou au moins une étape d'échange de chaleur au sein d'au moins un échangeur de chaleur.

14. Dispositif pour la mise en oeuvre du procédé selon l'une quelconque des revendications précédentes, **caractérisé en ce qu'**il comprend :
des moyens d'amenée de boues à traiter (1,2) contenant de la matière organique dans un injecteur-mélangeur dynamique primaire (5) pourvu d'une sortie de mélange uniforme primaire et de moyens d'amenée de vapeur de récupération (10,18) ;
des moyens d'amenée dudit mélange uniforme primaire (11) dans un injecteur-mélangeur dynamique secondaire (12) pourvu d'une sortie de mélange uniforme secondaire et de moyens d'amenée de vapeur vive (100)
des moyens d'amenée (13) dudit mélange uniforme secondaire vers un réacteur tubulaire d'hydrolyse thermique (14) ;
des moyens de production (1000) de ladite vapeur de récupération à partir dudit mélange uniforme secondaire hydrolysé obtenu en sortie dudit réacteur tubulaire (14), lesdits moyens de production comprenant une sortie de vapeur de récupération communiquant avec lesdits moyens d'amenée de vapeur de récupération (10,18) ;
des moyens de refroidissement dudit mélange uniforme secondaire hydrolysé provenant desdits moyens de production de vapeur de récupération (1000) à une température permettant la digestion ultérieure de la matière organique hydrolysée qu'il contient,
ledit injecteur-mélangeur dynamique primaire (5) et ledit injecteur-mélangeur dynamique secondaire (12) présentant chacun une chambre et un rotor à pales.

15. Dispositif selon la revendication 14, **caractérisé en ce que** lesdits moyens de production de vapeur de récupération comprennent au moins un échangeur de chaleur (90) comprenant une entrée (901) communiquant avec la sortie dudit réacteur tubulaire (5), une entrée d'eau de refroidissement communiquant avec des moyens d'amenée d'eau (91), une sortie de vapeur de récupération et une sortie de boues hydrolysées refroidies.

16. Dispositif selon la revendication 15, **caractérisé en ce que** lesdits moyens de production de vapeur de récupération comprennent au moins un réacteur de vapeur de flash (79) dont l'entrée communique avec la sortie dudit réacteur tubulaire (5).

17. Dispositif selon l'une quelconque des revendications 14 à 16, **caractérisé en ce que** lesdits moyens de refroidissement dudit mélange uniforme secondaire hydrolysé comprennent des moyens de dilution dudit mélange uniforme secondaire à l'eau et/ou avec des boues fraiches, et/ou des moyens d'échange de chaleur au sein d'au moins un échangeur de chaleur.

18. Dispositif selon l'une quelconque des revendications 14 à 17, **caractérisé en ce que** ledit réacteur tubulaire d'hydrolyse thermique est vertical et présente une entrée à son extrémité inférieure et une sortie à son extrémité supérieure, ou inversement.

19. Dispositif selon l'une quelconque des revendications 14 à 17, caractérisé en que ledit réacteur tubulaire d'hydrolyse thermique présente une première portion verticale directement prolongée par une deuxième portion verticale, l'entrée du réacteur étant prévue en partie inférieure de ladite première portion verticale et la sortie dudit réacteur étant prévue en partie inférieure de ladite deuxième portion verticale.

20. Dispositif selon l'une quelconque des revendications 14 à 17, caractérisé en que ledit réacteur tubulaire d'hydrolyse thermique présente une première portion verticale directement prolongée par une deuxième portion verticale, l'entrée du réacteur étant prévue en partie supérieure de la première portion verticale et la sortie du réacteur étant prévue en partie supérieure de ladite deuxième portion verticale.

21. Dispositif selon l'une quelconque des revendications 14 à 17, caractérisé en que ledit réacteur tubulaire d'hydrolyse thermique présente une première portion verticale directement prolongée par une deuxième portion verticale, l'entrée du réacteur étant prévue en partie supérieure de ladite première portion verticale et la sortie dudit réacteur étant prévue en partie inférieure de ladite deuxième portion verticale, ou inversement.

22. Dispositif selon l'une des revendications 14 à 21 **caractérisé en ce qu'**il comprend des moyens destinés à maintenir la pression dans ledit réacteur tubulaire d'hydrolyse thermique.

## Patentansprüche

1. Verfahren zur kontinuierlichen thermischen Hydrolyse von zu behandelndem Schlamm, der organisches Material enthält, wobei das Verfahren die Schritte umfasst:
Entwässern und homogenisieren des Schlammes, um einen Schlamm mit einem Trockensubstanzgehalt von 20 bis 35 Gew.-% Trockensubstanz zu erhalten;
gleichzeitiges Einleiten von Abhitzedampf in den Schlamm und Mischen des Schlamms mit dem Abhitzedampf durch einen primären dynamischen Injektormischer mit einer Kammer und einem Schaufelrotor, um eine primäre gleichmäßige Mischung aus vorerhitztem Schlamm zu erhalten;
Befördern der primären einheitlichen Mischung zu einem sekundären dynamischen Injektormischer, der eine Kammer und einem Schaufelrotor aufweist, und gleichzeitigem Einleiten von Frischdampf in die primäre einheitliche Mischung und Mischen der primären einheitlichen Mischung mit dem Frischdampf, um eine sekundäre einheitliche Mischung von Schlamm zu erhalten, der auf die gewünschte Temperatur für die thermische Hydrolyse erhitzt ist;
Befördern der sekundären einheitlichen Mischung in einen Rohrreaktor unter Druck und Hervorrufen der Strömung im Wesentlichen mit Pfropfenströmungscharakter dieser sekundären einheitlichen Mischung in dem Reaktor für eine Verweildauer die ausreicht und eine Temperatur die ausreicht, um die thermische Hydrolyse des organischen Materials zu ermöglichen, die in dieser sekundären einheitlichen Mischung vorhanden ist;
Erzeugen des Abhitzedampfs innerhalb von Einrichtungen zum Erzeugen von Abhitzedampf aus der hydrolysierten sekundären einheitlichen Mischung, die am Ausgang des Rohrreaktors erhalten wird;
Abkühlen der hydrolysierten sekundären einheitlichen Mischung am Ausgang der Einrichtungen zum Erzeugen von Abhitzedampf auf eine Temperatur, die den anschließenden Aufschluss des hydrolysierten organischen Materials, das sie enthält, ermöglicht.

2. Verfahren nach Anspruch 1, **dadurch gekennzeichnet, dass** der Schritt zum Erzeugen des Abhitzedampfs umfasst:
einen Schritt zum Befördern der hydrolysierten sekundären einheitlichen Mischung bei ihrem Ausgang aus dem Rohrreaktor zum Eingang eines Wärmetauschers;
einen Schritt zum Befördern von Wasser zu einem anderen Eingang des Wärmetauschers;
wobei die hydrolysierte sekundäre einheitliche Mischung ihre Hitze mindestens teilweise auf das Wasser überträgt, um indirekt den Abhitzedampf zu erzeugen.

3. Verfahren nach Anspruch 1, **dadurch gekennzeichnet, dass** der Schritt zum Erzeugen von Abhitzedampf einen Schritt zum Befördern der hydrolysierten sekundären einheitlichen Mischung bei ihrem Ausgang aus dem Rohrreaktor in einen Entspannungsreaktor umfasst, in dessen Innerem der Druck und die Temperatur der hydrolysierten sekundären einheitlichen Mischung schnell abgesenkt werden, um direkt Entspannungsdampf zu erzeugen, wobei der Entspannungsdampf den Abhitzedampf darstellt.

4. Verfahren nach einem der Ansprüche 1 bis 3, **dadurch gekennzeichnet, dass** der Druck des Abhitzedampfs im Bereich zwischen 1 und 10 bar liegt.

5. Verfahren nach einem der Ansprüche 1 bis 4, **dadurch gekennzeichnet, dass** die Temperatur des Abhitzedampfs im Bereich zwischen 100 °C und 180 °C liegt.

6. Verfahren nach einem der Ansprüche 1 bis 5, **dadurch gekennzeichnet, dass** die Temperatur des Schlamms, der zum Eingang des primären Injektormischers befördert wird, unter 60 °C liegt.

7. Verfahren nach einem der Ansprüche 1 bis 6, **dadurch gekennzeichnet, dass** die Temperatur der primären einheitlichen Mischung am Ausgang des primären Injektormischers unter 100 °C liegt.

8. Verfahren nach einem der Ansprüche 1 bis 7, **dadurch gekennzeichnet, dass** die sekundäre einheitliche Mischung am Ausgang des sekundären Injektormischers eine Temperatur im Bereich zwischen 100 °C und 200 °C und einen Druck im Bereich zwischen 1 bar und 22 bar aufweist.

9. Verfahren nach einem der Ansprüche 1 bis 8, **dadurch gekennzeichnet, dass** die sekundäre einheitliche Mischung am Ausgang des sekundären Injektormischers eine Temperatur im Bereich zwischen 150 °C und 170 °C und einen Druck im Bereich zwischen 5 bar und 15 bar aufweist.

10. Verfahren nach einem der Ansprüche 8 oder 9, **dadurch gekennzeichnet, dass** der Wasserdampf, der verwendet wird, um die sekundäre einheitliche Mischung herzustellen, eine Temperatur im Bereich zwischen 100 °C und 220 °C, vorzugsweise zwischen 180 °C und 200 °C, und einen Druck im Bereich zwischen 1 bar und 23 bar, vorzugsweise zwischen 10 bar und 16 bar aufweist.

11. Verfahren nach einem der vorhergehenden Ansprüche, **dadurch gekennzeichnet, dass** die Verweildauer der sekundären einheitlichen Mischung in dem Reaktor im Bereich zwischen 10 Minuten und 2 Stunden, vorzugsweise zwischen 20 Minuten und 40 Minuten liegt.

12. Verfahren nach Anspruch 11, **dadurch gekennzeichnet, dass** die Verweildauer der sekundären einheitlichen Mischung in dem Reaktor mindestens 20 Minuten beträgt, und dadurch, dass die Temperatur der sekundären einheitlichen Mischung in dem Reaktor mindestens 100 °C beträgt, damit die Hygienisierung des Schlamms, der in diesem enthalten ist, ermöglicht wird.

13. Verfahren nach einem der vorhergehenden Ansprüche, **dadurch gekennzeichnet, dass** der Schritt zum Abkühlen der hydrolysierten einheitlichen Mischung mindestens ein Verdünnen mit Wasser und/oder mit Frischschlamm und/oder mindestens einen Schritt zum Wärmetauschen innerhalb mindestens eines Wärmetauschers umfasst.

14. Vorrichtung zum Ausführen des Verfahrens nach einem der vorhergehenden Ansprüche, **dadurch gekennzeichnet, dass** sie umfasst:
Einrichtungen zum Befördern von zu behandelndem Schlamm (1, 2) der organisches Material enthält, in einen primären dynamischen Injektormischer (5), der mit einem Ausgang für die primäre einheitliche Mischung und Einrichtungen zum Befördern von Abhitzedampf (10, 18) versehen ist;
Einrichtungen zum Befördern der primären einheitlichen Mischung (11) in einen sekundären dynamischen Injektormischer (12), der mit einem Ausgang für die sekundäre einheitliche Mischung und Einrichtungen zum Befördern von Frischdampf (100) versehen ist,
Einrichtungen zum Befördern (13) der sekundären einheitlichen Mischung zu einem Rohrreaktor zur thermischen Hydrolyse (14);
Einrichtungen zum Erzeugen (1000) des Abhitzedampfs aus der hydrolysierten sekundären einheitlichen Mischung, die am Ausgang des Rohrreaktors (14) erhalten wurde, wobei die Einrichtungen zum Erzeugen einen Ausgang für Abhitzedampf umfassen, der mit den Einrichtungen zum Befördern von Abhitzedampf (10, 18) verbunden ist;
Einrichtungen zum Abkühlen der hydrolysierten sekundären einheitlichen Mischung, die aus den Einrichtungen zum Erzeugen von Abhitzedampf (1000) kommt, auf eine Temperatur, die den anschließenden Aufschluss des hydrolysierten organischen Materials, das sie enthält, ermöglicht,
wobei der primäre dynamische Injektormischer (5) und der sekundäre dynamische Injektormischer (12) jeweils eine Kammer und einem Schaufelrotor aufweisen.

15. Vorrichtung nach Anspruch 14, **dadurch gekennzeichnet, dass** die Einrichtungen zum Erzeugen von Abhitzedampf mindestens einen Wärmetauscher (90), der einen Eingang (901) umfasst, der mit dem Ausgang des Rohrreaktors (5) verbunden ist, einen Kühlwassereingang, der mit Einrichtungen zum Befördern von Wasser (91) verbunden ist, einen Abhitzedampfausgang und einen Ausgang für abgekühlten hydrolysierten Schlamm umfassen.

16. Vorrichtung nach Anspruch 15, **dadurch gekennzeichnet, dass** die Einrichtungen zum Erzeugen von Abhitzedampf mindestens einen Entspannungsdampfreaktor (79) umfassen, dessen Eingang mit dem Ausgang des Rohrreaktors (5) verbunden ist.

17. Vorrichtung nach einem der Ansprüche 14 bis 16, **dadurch gekennzeichnet, dass** die Einrichtungen zum Abkühlen der hydrolysierten sekundären einheitlichen Mischung Einrichtungen zum Verdünnen der sekundären einheitlichen Mischung mit Wasser und/oder mit Frischschlamm und/oder Einrichtungen zum Wärmetauschen innerhalb mindestens eines Wärmetauschers umfassen.

18. Vorrichtung nach einem der Ansprüche 14 bis 17, **dadurch gekennzeichnet, dass** der Rohrreaktor zur thermischen Hydrolyse vertikal ist und einen Eingang an seinem unteren Ende und einen Ausgang an seinem oberen Ende aufweist oder umgekehrt.

19. Vorrichtung nach einem der Ansprüche 14 bis 17, **dadurch gekennzeichnet, dass** der Rohrreaktor zur thermischen Hydrolyse einen ersten vertikalen Abschnitt aufweist, der direkt mit einem zweiten vertikalen Abschnitt verlängert ist, wobei der Eingang des Reaktors am unteren Teil des ersten vertikalen Abschnitts vorgesehen ist und der Ausgang des Reaktors am unteren Teil des zweiten vertikalen Abschnitts vorgesehen ist.

20. Vorrichtung nach einem der Ansprüche 14 bis 17, **dadurch gekennzeichnet, dass** der Rohrreaktor zur thermischen Hydrolyse einen ersten vertikalen Abschnitt aufweist, der direkt mit einem zweiten vertikalen Abschnitt verlängert ist, wobei der Einlass des Reaktors am oberen Teil des ersten vertikalen Abschnitts vorgesehen ist und der Auslass des Reaktors am oberen Teil des zweiten vertikalen Abschnitts vorgesehen ist.

21. Vorrichtung nach einem der Ansprüche 14 bis 17, **dadurch gekennzeichnet, dass** der Rohrreaktor zur thermischen Hydrolyse einen ersten vertikalen Abschnitt aufweist, der direkt mit einem zweiten vertikalen Abschnitt verlängert ist, wobei der Einlass des Reaktors am oberen Teil des ersten vertikalen Abschnitts vorgesehen ist und der Auslass des Reaktors am unteren Teil des zweiten vertikalen Abschnitts vorgesehen ist, oder umgekehrt.

22. Vorrichtung nach einem der Ansprüche 14 bis 21, **dadurch gekennzeichnet, dass** sie Einrichtungen umfasst, die dazu bestimmt sind, den Druck in dem Rohrreaktor zur thermischen Hydrolyse aufrechtzuerhalten.

## Claims

1. Method for the continuous thermal hydrolysis of sludge to be treated, containing organic matter, said method comprising the steps of:
dewatering and homogenizing said sludge to be treated to obtain sludge having a dry solids content from over 20% to 35% by weight of dry matter;
simultaneously carrying out the injection of recovered steam into said sludge and mixing said sludge with said recovered steam by means of a primary dynamic injector-mixer having a chamber and a blade rotor so as to obtain a primary uniform mixture of pre-heated sludge;
conveying said secondary uniform mixture towards a secondary dynamic injector-mixer having a chamber and a blade rotor and simultaneously carrying out the injection of fresh steam into said primary uniform mixture and the mixture of said primary uniform mixture with said fresh steam so as to obtain a uniform secondary mixture of sludge heated to the desired temperature of thermal hydrolysis;
conveying said secondary uniform mixture towards a tube reactor under pressure and prompting the essentially plug-type flow of this secondary uniform mixture in said reactor for a residence time that is sufficient and at a temperature that is sufficient to enable the thermal hydrolysis of the organic matter present in this secondary uniform mixture;
producing said recovered steam within means for the production of recovered steam from said secondary uniform hydrolyzed mixture obtained at exit from said tube reactor;
cooling said secondary uniform mixture when it exits said means for producing recovered steam to a temperature enabling the subsequent digestion of the hydrolyzed organic matter that it contains.

2. Method according to claim 1, **characterized in that** said step for producing recovered steam comprises:
a step for conveying said secondary uniform mixture when it exits from said tube reactor to the inlet of a heat exchanger;
a step for conveying water to another inlet of said heat exchanger;
said secondary uniform mixture transferring at least a part of its heat to said water to indirectly produce said recovered steam.

3. Method according to claim 1, **characterized in that** said step for producing recovered steam comprises a step for conveying said secondary uniform mixture when it exits from said tube reactor into a flash reactor within which the pressure and the temperature of said secondary uniform mixture are rapidly lowered to directly produce flash steam, said flash steam constituting said recovered steam.

4. Method according to any one of the claims 1 to 3, **characterized in that** the pressure of said recovered steam ranges from 1 to 10 bar.

5. Method according to any one of the claims 1 to 4, **characterized in that** the temperature of said recovered steam ranges from 100°C to 180°C.

6. Method according to any one of the claims 1 to 5, **characterized in that** the temperature of said sludge conveyed to the inlet of said primary injector-mixer is below 60°C.

7. Method according to any one of the claims 1 to 6, **characterized in that** the temperature of said primary uniform mixture when it exits from said primary injector-mixer is below 100°C.

8. Method according to any one of the claims 1 to 7, **characterized in that**, when it exits from said secondary injector-mixer, said secondary uniform mixture has a temperature of 100°C to 200°C and a pressure of 1 bar to 22 bar.

9. Method according to any one of the claims 1 to 8, **characterized in that**, when it exits said secondary injector-mixer, said secondary uniform mixture has a temperature of 150°C to 170°C and a pressure of 5 bar to 15 bar.

10. Method according to any one of the claims 8 to 9, **characterized in that** the steam used to carry out said secondary uniform mixing has a temperature of 100°C to 220°C, preferably 180 °C to 200 °C, and a pressure of 1 bar to 23 bar, preferably 10 bar to 16 bar.

11. Method according to any one of the preceding claims, **characterized in that** said residence time of said secondary uniform mixture in said reactor ranges from 10 minutes to 2 hours, preferably from 20 minutes to 40 minutes.

12. Method according to claim 11, **characterized in that** said residence time of said secondary uniform mixture in said reactor is at least 20 minutes, and **in that** the temperature of said secondary uniform mixture in said reactor is at least 100°C so that it enables the hygienization of said sludge contained in this reactor.

13. Method according to any one of the preceding claims, **characterized in that** said step for cooling said secondary uniform mixture comprises at least one dilution with water and/or with fresh sludge, and/or at least one step for exchanging heat within at least one heat exchanger.

14. Device for implementing the method according to any one of the preceding claims, **characterized in that** it comprises:
means (1,2) for leading in sludge to be treated containing organic matter into a primary dynamic injector-mixer (5) having an outlet of primary uniform mixture ;
means (10,18) for leading in recovered steam (10,18) ;
means for leading in said primary uniform mixture (11) into a secondary dynamic injector-mixer (12) having an outlet of secondary uniform mixture and means (100) for leading in fresh steam ;
means (13) for leading in said secondary uniform mixture into a tube reactor for thermal hydrolysis (14);
means (1000) for producing said recovered steam from said secondary uniform hydrolyzed mixture obtained at exit from said tube reactor (14), said means for producing comprising a recovered steam outlet communicating with said means for leading in recovered steam (10,18) ;
means for cooling said secondary uniform mixture coming from said means (1000) for producing recovered steam at a temperature enabling the subsequent digestion of the hydrolyzed organic matter that it contains,
said primary dynamic injector-mixer (5) and said secondary dynamic injector-mixer (12) each having a chamber and a blade rotor.

15. Device according to claim 14, **characterized in that** said means for producing recovered steam comprise at least one heat exchanger (90) comprising an inlet (901) communicating with the outlet of said tube reactor, an inlet of cooling water communicating with means (91) for leading in water, and an outlet of recovered steam and an outlet of cooled hydrolyzed sludge.

16. Device according to claim 15, **characterized in that** said means for producing recovered steam comprise at least one flash vapor reactor (79), the inlet of which communicates with the outlet of said tube reactor.

17. Device according to any one of the claims 14 to 16, **characterized in that** said means for cooling said secondary uniform mixture comprise means for diluting said secondary uniform mixture with water and/or with fresh sludge, and/or means for exchanging heat within at least one heat exchanger.

18. Device according to any one of the claims 14 to 17, **characterized in that** said tube reactor for thermal hydrolysis is vertical and has an inlet at its lower end and an outlet at its upper end, or the reverse.

19. Device according to any one of the claims 14 to 17, **characterized in that** said tube reactor for thermal hydrolysis has a first vertical portion directly extended by a second vertical portion, the inlet of the reactor being provided at the lower part of said first vertical portion and the outlet of said reactor being provided at the lower part of said second vertical portion.

20. Device according to any one of the claims 14 to 17, **characterized in that** said tube reactor for thermal hydrolysis has a first vertical portion directly extended by a second vertical portion, the inlet of the reactor being provided at the upper part of the first vertical portion and the outlet of said reactor being provided at the upper part of said second vertical portion.

21. Device according to any one of the claims 14 to 17, **characterized in that** said tube reactor for thermal hydrolysis has a first vertical portion directly extended by a second vertical portion, the inlet of the reactor being provided at the upper part of said first vertical portion and the outlet of said reactor being provided at the lower part of said second vertical portion or the reverse.

22. Device according to any one of the claims 14 to 17**characterized in that** it comprises means intended for maintaining the pressure in said tube reactor for thermal hydrolysis.
